# EUROPEAN PATENT APPLICATION

(11) **EP 4 779 428 A1**
(43) Date of publication of application: **22.07.2026**
(21) Application number: 24876148.8
(22) Date of filing: 11.07.2024
(51) Int. Cl.: G05D 1/46, B64U 70/97, E04H 6/44

(54) **UNMANNED AERIAL VEHICLE CENTERING DEVICE, CENTERING CONTROL METHOD, COMPUTER DEVICE, AND STORAGE MEDIUM**

(30) Priority: 08.10.2023 CN 202311294585
(71) Applicant: Tianjin Yunsheng Intelligent Technology Co., Ltd., Tianjin 300457 (CN)
(72) Inventor: CHEN, Fangping, Tianjin 300457 (CN); ZHAO, Shaokui, Tianjin 300457 (CN); ZHANG, Xiaoqi, Tianjin 300457 (CN); GAO, Ming, Tianjin 300457 (CN)
(74) Representative: Kransell & Wennborg KB
(86) International application number: PCT/CN2024/104850
(87) International publication number: WO 2025/077327

(57) **Abstract**

The present invention relates to the technical field of unmanned aerial vehicle centering positioning. Provided are an unmanned aerial vehicle centering device, a centering control method, a computer device, and a storage medium. By slidably connecting a plurality of scrapers to a fixing plate, once an unmanned aerial vehicle has landed in a centering area, a driving member drives a driving disc to rotate, and the driving disc drives the scrapers to approach each other, thereby achieving centering positioning of the unmanned aerial vehicle. The synchronous movement of the plurality of scrapers can be driven by only one driving member, such that the structure is more compact, thereby alleviating the technical problem of structural complexity in the prior art caused by the need to use two driving electric motors for two sets of parallel scrapers in existing unmanned aerial vehicle centering structures.

## Description

### CROSS-REFERENCE TO RELATED APPLICATIONS

The present invention claims priority to Chinese Patent Application No. 2023112945858, filed with the China National Intellectual Property Administration on October 8, 2023, and entitled "UNMANNED AERIAL VEHICLE CENTERING DEVICE, CENTERING CONTROL METHOD, COMPUTER DEVICE, AND STORAGE MEDIUM", which is incorporated herein by reference in its entirety.

### TECHNICAL FIELD

The present invention relates to the technical field of unmanned aerial vehicle centering positioning, and in particular, to an unmanned aerial vehicle centering device, a centering control method, a computer device, and a storage medium.

### BACKGROUND

The application of unmanned aerial vehicles has become increasingly extensive, such as for plant protection, firefighting, military reconnaissance, and power grid and river inspection. Some applications require unmanned aerial vehicles to perform long-duration operations or long-distance missions, which demand relatively large amounts of electrical energy. The electrical energy carried by unmanned aerial vehicles often fails to satisfy operational requirements. After performing missions for a period of time, unmanned aerial vehicles require landing and recharging, and correspondingly, require an unmanned aerial vehicle parking platform or hangar. Due to landing precision limitations of unmanned aerial vehicles, automatic centering operations of unmanned aerial vehicles are often necessary.

Current unmanned aerial vehicle centering structures perform centering positioning by moving the unmanned aerial vehicle using two sets of parallel scrapers.

However, current unmanned aerial vehicle centering structures using two sets of parallel scrapers require two sets of driving motors, resulting in a complex structure and a relatively large overall footprint.

### SUMMARY

An objective of the present invention is to provide an unmanned aerial vehicle centering device, a centering control method, a computer device, and a storage medium, so as to alleviate the technical problem in the prior art in which the current unmanned aerial vehicle centering structure requires two sets of driving motors when using two sets of parallel scrapers, resulting in a complex structure.

The present invention provides an unmanned aerial vehicle centering device, which includes: a fixed plate, a driving member, a driving disk, and a scraper;
a plurality of scrapers are provided, a centering region is defined by the plurality of scrapers, and a bottom surface of each scraper is slidably connected to the fixed plate; and
the driving member is in transmission connection with the driving disk, and the driving member is configured to drive the driving disk to rotate along an axial direction of the driving disk, so as to drive the plurality of scrapers to move toward each other or away from each other through the driving disk.

Optionally, a top surface of the fixed plate is provided with a plurality of guide rails, each scraper is correspondingly provided with a guide rail, a bottom surface of each scraper is fixed with a slider, and the slider is slidably connected to the guide rail, so that the plurality of scrapers can move toward each other or away from each other along the guide rails to which the sliders are slidably connected.

Optionally, a top surface of each scraper is provided with a protruding portion, and the protruding portion extends into a slot of the driving disk.

Optionally, the driving disk has a rack section, a driving end of the driving member is provided with a gear, and the gear is meshed with the rack section.

Optionally, an end portion and a side surface of the scraper are respectively provided with a sliding board and a sliding groove, the sliding board of the scraper extends into a sliding groove of an adjacent scraper, and the sliding board can slide in the sliding groove.

Optionally, the unmanned aerial vehicle centering device further includes a pushing assembly;
the pushing assembly is connected to a top surface of the driving disk, and the pushing assembly is configured to rotate together with the driving disk, so that the pushing assembly pushes unmanned aerial vehicle arms to move; and
a plurality of pushing assemblies are provided, and a number of the pushing assemblies is equal to a number of the unmanned aerial vehicle arms.

Optionally, the pushing assembly includes a moving seat and a pushing member;
a bottom surface of the moving seat has an insertion protrusion, the insertion protrusion extends into the driving disk, and a top surface of the moving seat is connected to the pushing member; and
when the pushing member moves together with the driving disk through the moving seat, a side surface of the pushing member can push the unmanned aerial vehicle arms.

Optionally, the pushing member is provided with an elongated hole, a top surface of the moving seat is provided with a plurality of connecting holes, and a connecting member passes through the elongated hole and selectively extends into different connecting holes, so as to adjust a relative position between the pushing member and the moving seat.

Optionally, the pushing assembly further includes a fixed guiding member and a connecting member; and
the fixed guiding member is located above the driving disk, the fixed guiding member is fixed to the fixed plate through the connecting member, a bottom surface of the fixed guiding member is provided with a sliding groove, the insertion protrusion passes through the sliding groove and extends into the driving disk, and the insertion protrusion can move within the sliding groove.

Optionally, the fixed guiding member includes a guiding base plate and a guiding housing; and
the guiding base plate is connected to the connecting member, the guiding base plate is provided with the sliding groove, the guiding housing is connected to two side edges of the guiding base plate, the guiding housing and the guiding base plate together define an arc-shaped chamber, and the pushing member extends into or retracts from the arc-shaped chamber with rotation of the driving disk.

Optionally, the connecting member includes a connecting upper plate, a connecting side plate, and a connecting lower plate;
the connecting upper plate is located above the driving disk, and the connecting upper plate is configured to connect to the guiding base plate;
the connecting lower plate is located below the fixed plate, and the connecting lower plate is configured to connect to the fixed plate; and
a top end of the connecting side plate is connected to a side end of the connecting upper plate, and a bottom end of the connecting side plate is connected to a side end of the connecting lower plate.

Optionally, the connecting side plate is provided with an unmanned aerial vehicle detection switch, and the unmanned aerial vehicle detection switch is configured to detect whether an unmanned aerial vehicle body is present on a top surface of the connecting upper plate.

Optionally, a peripheral outer circumference of the fixed plate is provided at intervals with an opening detection switch and a closing detection switch;
a peripheral outer circumference of the driving disk is provided at intervals with an opening detection member and a closing detection member;
the opening detection switch is configured to sense the opening detection member, so that the plurality of scrapers stop moving in directions away from each other; and
the closing detection switch is configured to sense the closing detection member, so that the plurality of scrapers stop moving in directions toward each other.

The present invention further provides a centering control method for unmanned aerial vehicle takeoff and landing positioning based on the unmanned aerial vehicle centering device, which includes the following steps:
when the unmanned aerial vehicle is ready to land, the driving disk rotates to drive the plurality of scrapers to move away from each other;
when the opening detection member rotates with the driving disk to a position above the opening detection switch, the opening detection switch senses the opening detection member, and the plurality of scrapers stop moving;
after the unmanned aerial vehicle lands in the centering region, the driving disk rotates to drive the plurality of scrapers to move toward each other; and
when the closing detection member rotates with the driving disk to a position above the closing detection switch, the closing detection switch senses the closing detection member, the plurality of scrapers stop moving, and the positioning centering of the unmanned aerial vehicle is completed.

Optionally, the centering control method further includes the following steps:
when the unmanned aerial vehicle is ready to be launched, the unmanned aerial vehicle detection switch detects the unmanned aerial vehicle, and the driving disk rotates to drive the plurality of scrapers to move away from each other;
when the opening detection member rotates with the driving disk to a position above the opening detection switch, the opening detection switch senses the opening detection member, the plurality of scrapers stop moving, and the unmanned aerial vehicle is launched; and
after launching the unmanned aerial vehicle, the driving disk rotates to drive the plurality of scrapers to move toward each other, and when the closing detection switch detects the closing detection member, the plurality of scrapers stop moving toward each other.

The present invention further provides a computer device configured to execute the centering control method for unmanned aerial vehicle takeoff and landing positioning.

The present invention further provides a computer-readable storage medium configured to store software for executing the centering control method for unmanned aerial vehicle takeoff and landing positioning.

The unmanned aerial vehicle centering device provided by the present invention slidably connects a plurality of scrapers to the fixed plate. After an unmanned aerial vehicle lands in the centering region, the driving member drives the driving disk to rotate, and the driving disk drives the scrapers to move toward each other for centering positioning of the unmanned aerial vehicle. A single driving member can drive synchronous movement of the plurality of scrapers, so that the structure is more compact, alleviating the technical problem in the prior art in which the current unmanned aerial vehicle centering structure requires two sets of driving motors when using two sets of parallel scrapers, resulting in a complex structure.

### BRIEF DESCRIPTION OF DRAWINGS

To describe the technical solutions in specific implementations of the present invention or in the prior art more clearly, the following briefly describes the drawings for describing specific implementations or the prior art. It is clear that the drawings in the following descriptions show merely some embodiments of the present invention, and those of ordinary skill in the art may still derive other drawings from these drawings without inventive efforts.
FIG. 1 is a schematic diagram of an overall structure of an unmanned aerial vehicle centering device according to an embodiment of the present invention;
FIG. 2 is a schematic diagram of a structure of scrapers and a fixed plate in an unmanned aerial vehicle centering device according to an embodiment of the present invention;
FIG. 3 is a schematic diagram of a structure of scrapers and a driving disk in an unmanned aerial vehicle centering device according to an embodiment of the present invention;
FIG. 4 is an exploded schematic diagram of a pushing member in an unmanned aerial vehicle centering device according to an embodiment of the present invention;
FIG. 5 is an exploded schematic diagram of a pushing member and a moving seat in an unmanned aerial vehicle centering device according to an embodiment of the present invention;
FIG. 6 is an installation schematic diagram of a fixed guiding member in an unmanned aerial vehicle centering device according to an embodiment of the present invention;
FIG. 7 is a schematic diagram of a connecting member in an unmanned aerial vehicle centering device according to an embodiment of the present invention;
FIG. 8 is a schematic diagram of a scraper in an unmanned aerial vehicle centering device according to an embodiment of the present invention;
FIG. 9 is a schematic diagram illustrating use of an unmanned aerial vehicle centering device including an unmanned aerial vehicle body according to an embodiment of the present invention; and
FIG. 10 is a schematic diagram of a structure of an unmanned aerial vehicle centering device including an opening detection switch, an opening detection member, a closing detection switch, a closing detection member, and an unmanned aerial vehicle detection switch according to an embodiment of the present invention.

Reference numerals: 10. unmanned aerial vehicle body; 11. unmanned aerial vehicle arm; 100. fixed plate; 110. guide rail; 200. driving member; 210. gear; 300. driving disk; 310. slot; 320. rack section; 400. scraper; 410. protruding portion; 420. slider; 430. sliding board; 440. sliding groove; 500. pushing assembly; 510. moving seat; 511. insertion protrusion; 512. connecting hole; 520. pushing member; 521. elongated hole; 530. fixed guiding member; 531. guiding base plate; 532. guiding housing; 533. sliding groove; 540. connecting member; 541. connecting upper plate; 542. connecting side plate; 543. connecting lower plate; 601. opening detection switch; 602. opening detection member; 603. closing detection switch; 604. closing detection member; and 605. unmanned aerial vehicle detection switch.

### DETAILED DESCRIPTION OF EMBODIMENTS

The technical solutions of the present invention are described clearly and completely below in conjunction with embodiments. It is apparent that the described embodiments constitute part of the embodiments of the present invention, rather than all embodiments. All other embodiments obtained by those of ordinary skill in the art based on embodiments of the present invention without inventive efforts shall fall within the protection scope of the present invention.

Current unmanned aerial vehicle centering structures can only perform centering positioning of an unmanned aerial vehicle and cannot adjust the heading of the unmanned aerial vehicle.

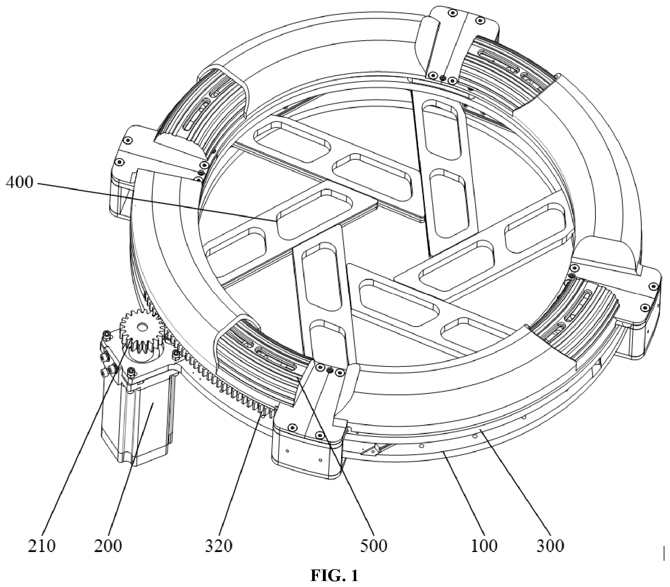

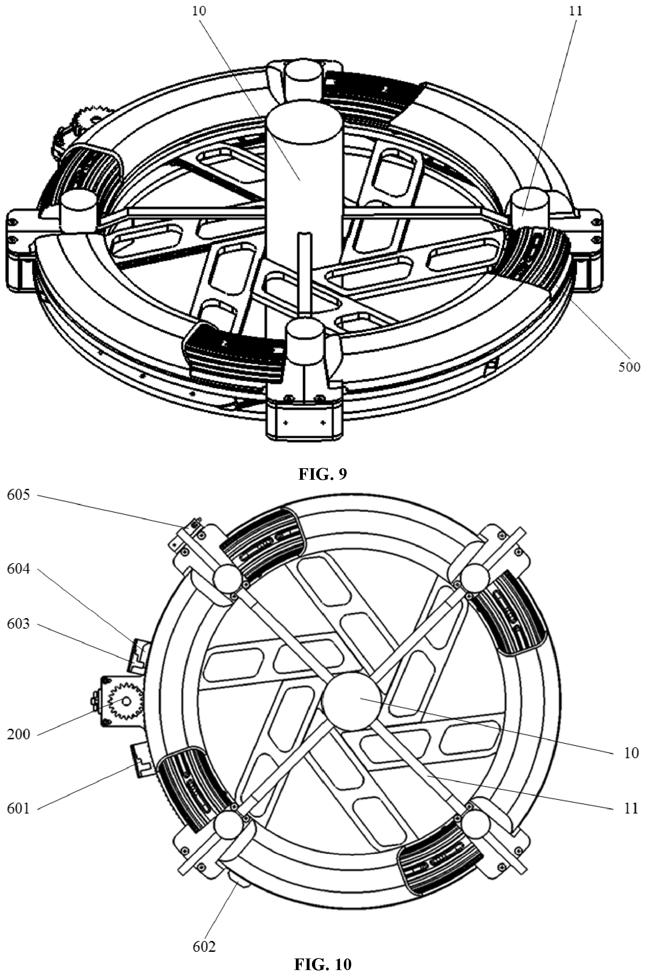

In view of this, as shown in FIGS. 1 and 9, an unmanned aerial vehicle centering device provided in this embodiment includes a fixed plate 100, a driving member 200, a driving disk 300, and a scraper 400; a plurality of scrapers 400 are provided, and a centering region is defined by the plurality of scrapers 400. At least three scrapers 400 are provided, and the specific number of scrapers 400 depends on a shape of the unmanned aerial vehicle body 10. For example, when an outer contour of the unmanned aerial vehicle body 10 is cylindrical, six scrapers 400 can be provided, and the six scrapers 400 are sequentially connected to define a hexagonal centering region. When the outer contour of the unmanned aerial vehicle body 10 is cuboid, four scrapers 400 can be provided, and the four scrapers 400 together define a quadrilateral centering region.

Optionally, six scrapers 400 are provided, so that the centering positioning of the six scrapers 400 is more accurate.

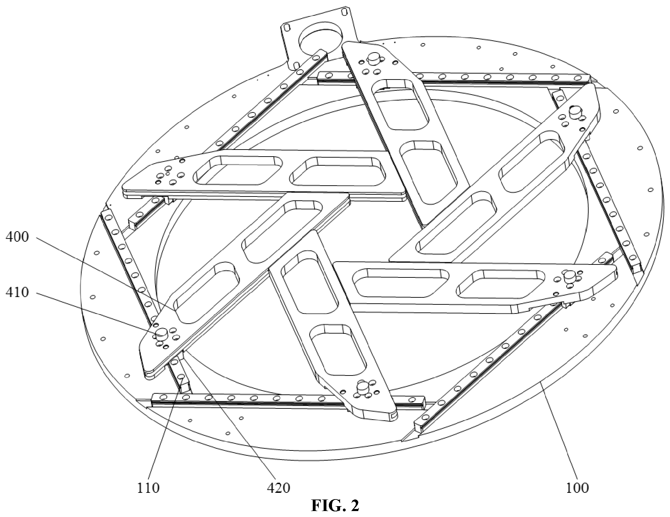

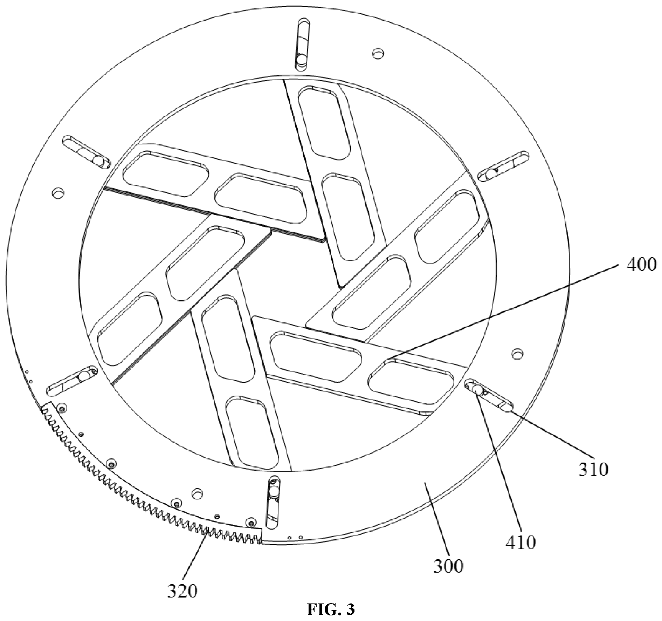

Optionally, as shown in FIG. 2, a bottom surface of each scraper 400 is slidably connected to the fixed plate 100, so that the scrapers 400 can slide on a surface of the fixed plate 100. As shown in FIG. 3, a top surface of each scraper 400 is provided with a protruding portion 410. Specifically, the protruding portion 410 is configured as a cam follower, and the protruding portion 410 extends into a slot 310 of the driving disk 300. When the driving disk 300 rotates, the slot 310 and the protruding portion 410 drive the plurality of scrapers 400 to simultaneously slide on the surface of the fixed plate 100. By controlling a rotation direction of the driving disk 300, the plurality of scrapers 400 can be driven to move toward each other or away from each other. For example, when the driving disk 300 rotates clockwise as shown in FIG. 2 or FIG. 3, the driving disk 300 drives the scrapers 400 to move away from each other, facilitating subsequent takeoff of the unmanned aerial vehicle body 10. When the driving disk 300 rotates counterclockwise as shown in FIG. 2 or FIG. 3, the driving disk 300 drives the scrapers 400 to move toward each other, pushing the unmanned aerial vehicle body 10 located in the centering region and performing centering positioning of the unmanned aerial vehicle body 10.

In addition, it should be noted that the protruding portion 410 and the slot 310 can be arranged in an opposite manner. For example, the protruding portion 410 is arranged on a bottom of the driving disk 300, the slot 310 is correspondingly arranged on the scraper 400, and the protruding portion 410 extends into the slot 310. It is only necessary to ensure that rotation of the driving disk 300 can drive the plurality of scrapers 400 to move toward each other or away from each other.

Optionally, the driving member 200 is in transmission connection with the driving disk 300, and a driving force generated by the driving member 200 acts on the driving disk 300, driving the driving disk 300 to rotate along an axial direction thereof, so as to drive the plurality of scrapers 400 to move toward each other or away from each other. Specifically, the driving disk 300 has a rack section 320, the driving member 200 is specifically configured as a driving motor, a driving end of the driving member 200 is provided with a gear 210, and the gear 210 is meshed with the rack section 320, so that the rotational driving force generated by the driving member 200 can be transmitted to the driving disk 300 through cooperation of the gear 210 and the rack section 320, thereby driving the driving disk 300 to rotate.

The unmanned aerial vehicle centering device provided in this embodiment slidably connects a plurality of scrapers 400 to the fixed plate 100, and the protruding portion 410 on the top surface of each scraper 400 extends into the slot of the driving disk 300. After an unmanned aerial vehicle lands in the centering region, the driving member 200 drives the driving disk 300 to rotate, and the driving disk 300 drives the scrapers 400 to move toward each other for centering positioning of the unmanned aerial vehicle. A single driving member can drive synchronous movement of the plurality of scrapers, so that the structure is more compact, alleviating the technical problem in the prior art in which the current unmanned aerial vehicle centering structure requires two sets of driving motors when using two sets of parallel scrapers, resulting in a complex structure.

Based on the above embodiment, in an optional embodiment, a top surface of the fixed plate 100 in the unmanned aerial vehicle centering device of this embodiment is provided with a plurality of guide rails 110, and the number of guide rails 110 is equal to the number of scrapers 400. Each scraper 400 is correspondingly provided with a guide rail 110, a bottom surface of each scraper 400 is fixed with a slider 420, and the slider 420 is slidably connected to the guide rail 110, so that the plurality of scrapers 400 can move toward each other or away from each other along the guide rails 110 to which the sliders 420 are slidably connected. When the driving disk 300 rotates clockwise as shown in FIG. 2 or FIG. 3, the scraper 400 moves along the guide rail 110, and the plurality of scrapers 400 move away from each other. When the driving disk 300 rotates counterclockwise as shown in FIG. 2 or FIG. 3, the scraper 400 moves along the guide rail 110, and the plurality of scrapers 400 move toward each other, performing centering positioning of the unmanned aerial vehicle body 10.

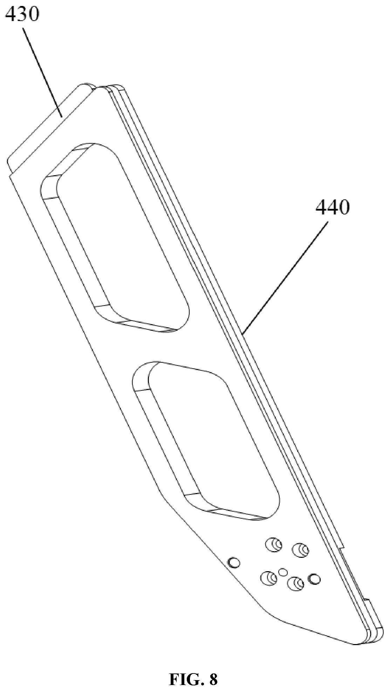

Optionally, to limit the movement trajectory of the scraper 400, as shown in FIG. 8, an end portion and a side surface of the scraper 400 are respectively provided with a sliding board 430 and a sliding groove 440, the sliding board 430 of the scraper 400 extends into a sliding groove 440 of an adjacent scraper 400, and the sliding board 430 can slide in the sliding groove 440. This configuration enables synchronous movement of six scrapers 400 as shown in FIG. 8, so that the six scrapers 400 together define a hexagonal centering region.

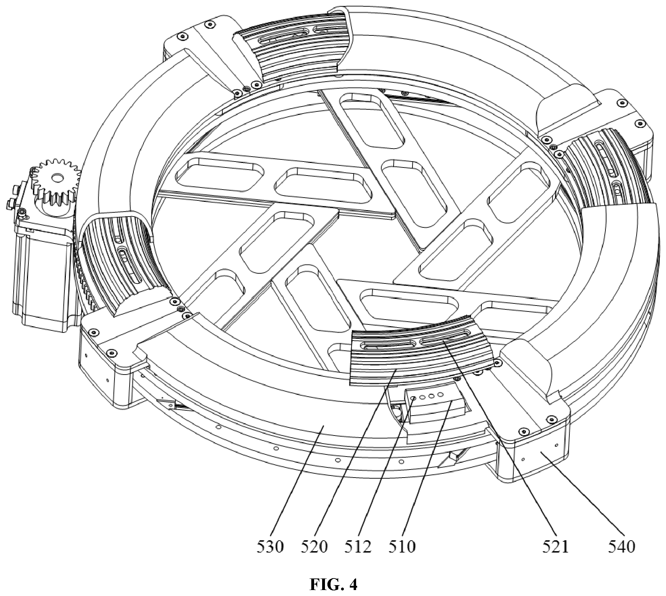

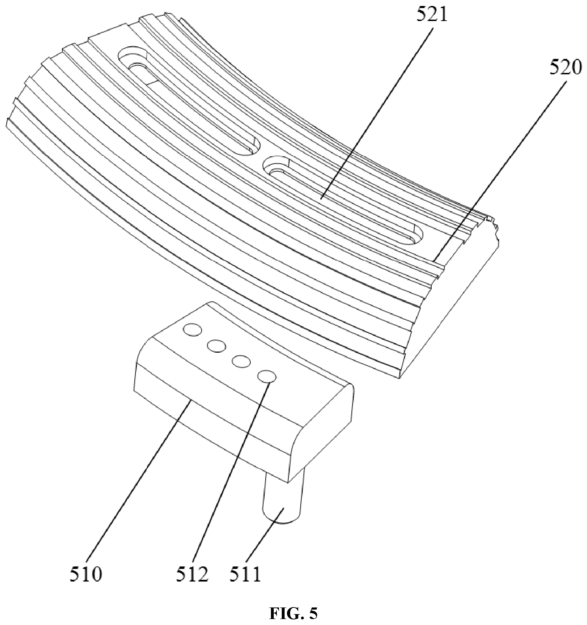

As shown in FIGS. 4 and 5, in an optional embodiment, a plurality of pushing assemblies 500 are provided, and the number of the pushing assemblies 500 is equal to a number of the unmanned aerial vehicle arms 11. The pushing assembly 500 is connected to a top surface of the driving disk 300, and the pushing assembly 500 is configured to rotate together with the driving disk 300. When the pushing assembly 500 rotates together with the driving disk 300, the pushing assembly 500 can push the unmanned aerial vehicle arm 11 and drive the unmanned aerial vehicle arm 11 to move, thereby adjusting a heading of the unmanned aerial vehicle body 10.

Specifically, the pushing assembly 500 includes a moving seat 510 and a pushing member 520. A bottom surface of the moving seat 510 has an insertion protrusion 511, and the driving disk 300 is correspondingly provided with an insertion hole. The insertion protrusion 511 extends into the insertion hole of the driving disk 300, thereby connecting the moving seat 510 to the driving disk 300, so that the moving seat 510 moves together with the driving disk 300. A top surface of the moving seat 510 is connected to the pushing member 520, so that the pushing member 520 is mounted on the moving seat 510. When the pushing member 520 moves with the moving seat 510 and the driving disk 300, a side surface of the pushing member 520 can push the unmanned aerial vehicle arm 11.

In addition, it should be noted that a plurality of pushing members 520 are provided according to the number of unmanned aerial vehicle arms 11, and a gap space is reserved between any two adjacent pushing members 520, so that when the unmanned aerial vehicle body 10 lands, each unmanned aerial vehicle arm 11 falls into a corresponding gap space. Subsequently, during centering positioning, the driving disk 300 rotates, and the plurality of pushing members 520 move with the driving disk 300, so that the unmanned aerial vehicle arms 11 move within the gap spaces, thereby adjusting a heading of the unmanned aerial vehicle body 10.

Optionally, since only one driving member 200 is provided to drive movement of both the scraper 400 and the pushing member 520, a position of the pushing member 520 needs to be adjusted during initial use of the unmanned aerial vehicle body 10 and the unmanned aerial vehicle centering device, so that after completion of the centering operation, the heading adjustment of the unmanned aerial vehicle body 10 is also completed. In an optional embodiment, the pushing member 520 is provided with an elongated hole 521, a top surface of the moving seat 510 is provided with a plurality of connecting holes 512, and a connecting member passes through the elongated hole 521 and selectively extends into different connecting holes 512, so as to adjust a relative position between the pushing member 520 and the moving seat 510. For example, when the centering operation is completed and the unmanned aerial vehicle body 10 is still at a certain distance from a predetermined heading, the pushing member 520 can move toward the predetermined heading by changing the connection position between the connecting hole 512 and the elongated hole 521, thereby completing heading adjustment simultaneously with completion of the centering operation.

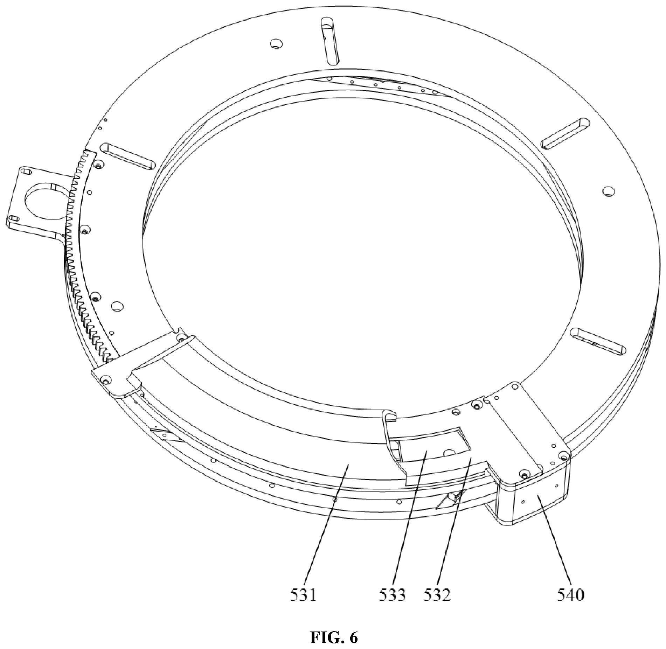

As shown in FIG. 6, in an optional embodiment, the pushing assembly 500 further includes a fixed guiding member 530 and a connecting member 540. The fixed guiding member 530 is located above the driving disk 300, the fixed guiding member 530 is fixed to the fixed plate 100 through the connecting member 540, and the fixed guiding member 530 can cover the pushing member 520. A bottom surface of the fixed guiding member 530 is provided with a sliding groove 533, the insertion protrusion 511 passes through the sliding groove 533 into the driving disk 300, and the insertion protrusion 511 can move within the sliding groove 533, thereby guiding movement of the pushing members 520.

Specifically, the fixed guiding member 530 includes a guiding base plate 531 and a guiding housing 532. The guiding base plate 531 is connected to the connecting member 540, and the guiding base plate 531 is provided with a sliding groove 533. The guiding housing 532 is connected to two side edges of the guiding base plate 531, and the guiding housing 532 and the guiding base plate 531 together define an arc-shaped chamber. The pushing member 520 extends into or retracts from the arc-shaped chamber with rotation of the driving disk 300. When the driving disk 300 rotates counterclockwise, the plurality of scrapers 400 move toward each other, and the pushing member 520 retracts from the arc-shaped chamber to push the unmanned aerial vehicle arm 11. When the driving disk 300 rotates clockwise, the plurality of scrapers 400 move away from each other, and the pushing member 520 moves toward the direction of extension into the arc-shaped chamber.

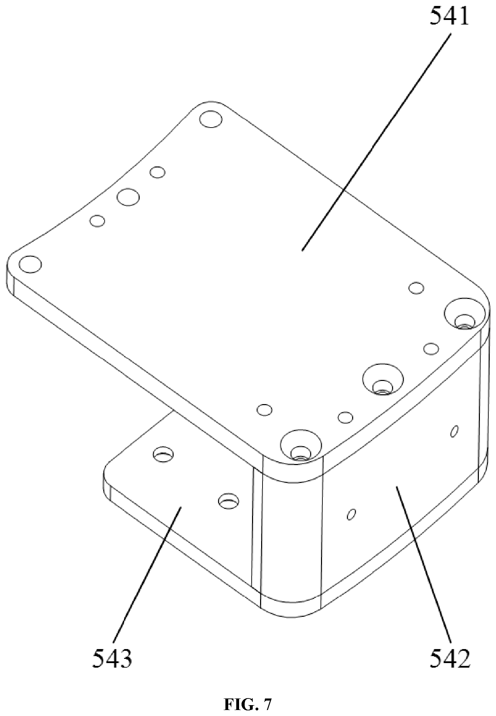

As shown in FIG. 7, in an optional embodiment, the connecting member 540 includes a connecting upper base plate 541, a connecting side plate 542, and a connecting lower base plate 543. The connecting upper base plate 541 is located above the driving disk 300, and the guiding base plate 531 is fixed to the connecting upper base plate 541 through screws. The connecting lower base plate 543 is located below the fixed plate 100, and the connecting lower base plate 543 is fixed to a lower surface of the fixed plate 100 through screws. A top end and a bottom end of the connecting side plate 542 are fixed to the connecting upper base plate 541 and the connecting lower base plate 543 through screws, respectively. The fixed plate 100 provides support to the guiding base plate 531 through the connecting member 540.

The unmanned aerial vehicle centering device provided in this embodiment can perform both centering operation and heading adjustment operation of the unmanned aerial vehicle using only a single driving member 200, so that the structure is more compact and occupies less space.

Based on the above embodiments, as shown in FIG. 10, according to the unmanned aerial vehicle centering device provided in this embodiment, the connecting side plate 542 is provided with an unmanned aerial vehicle detection switch 605. The unmanned aerial vehicle detection switch 605 is configured to detect whether the unmanned aerial vehicle body 10 is present on a top surface of the connecting upper base plate 541, so as to determine whether heading adjustment of the unmanned aerial vehicle is in place and whether the unmanned aerial vehicle has taken off.

Optionally, a peripheral outer circumference of the fixed plate 100 is provided at intervals with an opening detection switch 601 and a closing detection switch 603; a peripheral outer circumference of the driving disk 300 is provided at intervals with an opening detection member 602 and a closing detection member 604. The opening detection switch 601 is configured to sense the opening detection member 602, so that the plurality of scrapers 400 stop moving in directions away from each other. The closing detection switch 603 is configured to sense the closing detection member 604, so that the plurality of scrapers 400 stop moving in directions toward each other. In this way, the cooperation between the opening detection switch 601 and the opening detection member 602 controls stopping of opening movement of the plurality of scrapers 400, and the cooperation between the closing detection switch 603 and the closing detection member 604 controls stopping of closing movement of the plurality of scrapers 400.

It should be noted that FIG. 10 illustrates a position when the closing detection switch 603 senses the closing detection member 604, that is, when the closing detection member 604 moves above the closing detection switch 603, the stopping procedure of closing movement of the plurality of scrapers 400 is executed.

Optionally, the opening detection switch, the opening detection member, the closing detection switch, the closing detection member, and the unmanned aerial vehicle detection switch can be any one of a photoelectric switch or a proximity switch, so as to implement binary 0/1 detection function.

A centering control method for unmanned aerial vehicle takeoff and landing positioning provided in this embodiment includes the following steps:
the unmanned aerial vehicle is ready to land, and the driving disk 300 rotates to drive the plurality of scrapers 400 to move away from each other; when the opening detection member 602 rotates with the driving disk 300 to a position above the opening detection switch 601, the opening detection switch 601 senses the opening detection member 602, and the plurality of scrapers 400 stop moving; after the unmanned aerial vehicle lands in the centering region, the driving disk 300 rotates to drive the plurality of scrapers 400 to move toward each other; and when the closing detection member 604 rotates with the driving disk 300 to a position above the closing detection switch 603, the closing detection switch 603 senses the closing detection member 604, the plurality of scrapers 400 stop moving, and the positioning centering of the unmanned aerial vehicle is completed.

When the unmanned aerial vehicle is ready to be launched, the unmanned aerial vehicle detection switch 605 detects the unmanned aerial vehicle, and the driving disk 300 rotates to drive the plurality of scrapers 400 to move away from each other; when the opening detection member 602 rotates with the driving disk 300 to a position above the opening detection switch 601, the opening detection switch 601 senses the opening detection member 602, the plurality of scrapers 400 stop moving, and the unmanned aerial vehicle takes off; and after the unmanned aerial vehicle takes off, the driving disk 300 rotates to drive the plurality of scrapers 400 to move toward each other, and when the closing detection switch 603 detects the closing detection member 604, the plurality of scrapers stop moving toward each other.

According to the centering control method for unmanned aerial vehicle takeoff and landing positioning provided in this embodiment, the unmanned aerial vehicle centering device interacts with the unmanned aerial vehicle through detection switches, so as to implement safe takeoff and landing control by detecting presence of the unmanned aerial vehicle. During landing, automatic positioning centering of the unmanned aerial vehicle is performed, which can enable a hangar to implement safe takeoff and landing control for the unmanned aerial vehicle.

A computer device provided in this embodiment is configured to execute the centering control method for unmanned aerial vehicle takeoff and landing positioning.

Optionally, the computer device includes a plurality of instructions for causing a computer apparatus (which can be a personal computer, a server, or a network device) to perform all or part of the steps of the method according to various embodiments of the present invention.

A storage medium provided in this embodiment is configured to store software for executing the centering control method for unmanned aerial vehicle takeoff and landing positioning.

When implemented in the form of software functional units and sold or used as an independent product, the software can be stored in a computer-readable storage medium. Based on such understanding, the technical solutions of the present invention essentially can be, or part of the technical solutions contributing to the prior art can be, or part of the technical solutions can be embodied in the form of a software product. The computer software product is stored in a storage medium and includes several instructions for enabling a computer device (which can be a personal computer, a server, a network device or the like) to implement all or part of the steps of the method described in the embodiments of the present invention. The foregoing storage medium includes any medium that can store program code, such as a USB flash drive, a removable hard disk, a read-only memory (ROM), a random access memory (RAM), a magnetic disk, or an optical disc.

Finally, it should be noted that the foregoing embodiments are merely intended for describing the technical solutions of the present invention other than limiting the present invention. Although the present invention is described in detail with reference to the foregoing embodiments, those of ordinary skill in the art should understand that modifications can still be made to the technical solutions described in the foregoing embodiments or equivalent replacements can still be made to some or all technical features thereof, without departing from the scope of the technical solutions of embodiments of the present invention.

### INDUSTRIAL APPLICABILITY

The present invention provides an unmanned aerial vehicle centering device, a centering control method, a computer device, and a storage medium, which enable a more compact structure and alleviate the technical problem in the prior art in which the current unmanned aerial vehicle centering structure requires two driving motors when using two sets of parallel scrapers, resulting in a complex structure.

## Claims

1. An unmanned aerial vehicle centering device, **characterized by** comprising a fixed plate (100), a driving member (200), a driving disk (300), and a scraper (400), wherein
a plurality of scrapers (400) are provided, a centering region is defined by the plurality of scrapers (400), and a bottom surface of each scraper (400) is slidably connected to the fixed plate (100);
the driving member (200) is in transmission connection with the driving disk (300), and the driving member (200) is configured to drive the driving disk (300) to rotate along an axial direction of the driving disk (300), so as to drive the plurality of scrapers (400) to move toward each other or away from each other through the driving disk (300);
the unmanned aerial vehicle centering device further comprises a pushing assembly (500); and
the pushing assembly (500) is connected to a top surface of the driving disk (300), and the pushing assembly (500) is configured to rotate together with the driving disk (300), so that the pushing assembly (500) pushes unmanned aerial vehicle arms (11) to move.

2. The unmanned aerial vehicle centering device according to claim 1, wherein
a top surface of the fixed plate (100) is provided with a plurality of guide rails (110), each scraper (400) is correspondingly provided with a guide rail (110), a bottom surface of each scraper (400) is fixed with a slider (420), and the slider (420) is slidably connected to the guide rail (110), so that the plurality of scrapers (400) is capable of moving toward each other or away from each other along the guide rails (110) to which the sliders are slidably connected.

3. The unmanned aerial vehicle centering device according to claim 1, wherein
a top surface of each scraper (400) is provided with a protruding portion (410), and the protruding portion (410) extends into a slot (310) of the driving disk (300).

4. The unmanned aerial vehicle centering device according to claim 1, wherein
the driving disk (300) has a rack section (320), a driving end of the driving member (200) is provided with a gear (210), and the gear (210) is meshed with the rack section (320).

5. The unmanned aerial vehicle centering device according to claim 1, wherein
an end portion and a side surface of the scraper (400) are respectively provided with a sliding board (430) and a sliding groove (440), the sliding board (430) of the scraper (400) extends into a sliding groove (440) of an adjacent scraper (400), and the sliding board (430) is capable of sliding in the sliding groove (440).

6. The unmanned aerial vehicle centering device according to claim 1, wherein
a plurality of pushing assemblies (500) are provided, and a number of the pushing assemblies (500) is equal to a number of the unmanned aerial vehicle arms (11).

7. The unmanned aerial vehicle centering device according to claim 6, wherein
the pushing assembly (500) comprises a moving seat (510) and a pushing member (520);
a bottom surface of the moving seat (510) has an insertion protrusion (511), the insertion protrusion (511) extends into the driving disk (300), and a top surface of the moving seat (510) is connected to the pushing member (520); and
in response to the pushing member (520) moving together with the driving disk (300) through the moving seat (510), a side surface of the pushing member (520) is capable of pushing the unmanned aerial vehicle arms (11).

8. The unmanned aerial vehicle centering device according to claim 7, wherein
the pushing member (520) is provided with an elongated hole (521), a top surface of the moving seat (510) is provided with a plurality of connecting holes (512), and a connecting member passes through the elongated hole (521) and selectively extends into different connecting holes (512), so as to adjust a relative position between the pushing member (520) and the moving seat (510).

9. The unmanned aerial vehicle centering device according to claim 8, wherein
the pushing assembly (500) further comprises a fixed guiding member (530) and a connecting member (540); and
the fixed guiding member (530) is located above the driving disk (300), the fixed guiding member (530) is fixed to the fixed plate (100) through the connecting member (540), a bottom surface of the fixed guiding member (530) is provided with a sliding groove (533), the insertion protrusion (511) passes through the sliding groove (533) and extends into the driving disk (300), and the insertion protrusion (511) is capable of moving within the sliding groove (533).

10. The unmanned aerial vehicle centering device according to claim 9, wherein
the fixed guiding member (530) comprises a guiding base plate (531) and a guiding housing (532); and
the guiding base plate (531) is connected to the connecting member (540), the guiding base plate (531) is provided with the sliding groove (533), the guiding housing (532) is connected to two side edges of the guiding base plate (531), the guiding housing (532) and the guiding base plate (531) together define an arc-shaped chamber, and the pushing member (520) extends into or retracts from the arc-shaped chamber with rotation of the driving disk (300).

11. The unmanned aerial vehicle centering device according to claim 10, wherein
the connecting member (540) comprises a connecting upper plate (541), a connecting side plate (542), and a connecting lower plate (543);
the connecting upper plate (541) is located above the driving disk (300), and the connecting upper plate (541) is configured to connect to the guiding base plate (531);
the connecting lower plate (543) is located below the fixed plate (100), and the connecting lower plate (543) is configured to connect to the fixed plate (100); and
a top end of the connecting side plate (542) is connected to a side end of the connecting upper plate (541), and a bottom end of the connecting side plate (542) is connected to a side end of the connecting lower plate (543).

12. The unmanned aerial vehicle centering device according to claim 11, wherein
the connecting side plate (542) is provided with an unmanned aerial vehicle detection switch (605), and the unmanned aerial vehicle detection switch (605) is configured to detect whether an unmanned aerial vehicle body (10) is present on a top surface of the connecting upper plate (541).

13. The unmanned aerial vehicle centering device according to any one of claims 1-12, wherein
a peripheral outer circumference of the fixed plate (100) is provided at intervals with an opening detection switch (601) and a closing detection switch (603);
a peripheral outer circumference of the driving disk (300) is provided at intervals with an opening detection member (602) and a closing detection member (604);
the opening detection switch (601) is configured to sense the opening detection member (602), so that the plurality of scrapers (400) stop moving in directions away from each other; and
the closing detection switch (603) is configured to sense the closing detection member (604), so that the plurality of scrapers (400) stop moving in directions toward each other.

14. A centering control method for unmanned aerial vehicle takeoff and landing positioning based on the unmanned aerial vehicle centering device according to any one of claims 1-13, **characterized by** comprising the following steps:
driving the plurality of scrapers (400) to move away from each other by a rotation of the driving disk (300), in response to the unmanned aerial vehicle being ready to land;
sensing, by the opening detection switch (601), the opening detection member (602), and stopping movement of the plurality of scrapers (400), in response to the opening detection member (602) rotating with the driving disk (300) to a position above the opening detection switch (601);
driving, after the unmanned aerial vehicle lands in the centering region, the plurality of scrapers (400) to move toward each other by the rotation of driving disk (300); and
in response to the closing detection member (604) rotating with the driving disk (300) to a position above the closing detection switch (603), sensing, by the closing detection switch (603), the closing detection member (604), stopping the movement of the plurality of scrapers (400) stop moving, thereby completing the positioning centering of the unmanned aerial vehicle.

15. The centering control method for unmanned aerial vehicle takeoff and landing positioning according to claim 14, further comprising the following steps:
detecting, by the unmanned aerial vehicle detection switch (605), the unmanned aerial vehicle, and driving the plurality of scrapers (400) to move away from each other by the rotation of the driving disk (300), in response to the unmanned aerial vehicle being ready to be launched;
sensing, by the opening detection switch (601), the opening detection member (602), stopping the movement of the plurality of scrapers (400), and launching the unmanned aerial vehicle, in response to the opening detection member (602) rotating with the driving disk (300) to a position above the opening detection switch (601); and
after launching the unmanned aerial vehicle, driving the plurality of scrapers (400) to move toward each other by the rotation of the driving disk (300), and stopping the movement of the plurality of scrapers toward each other in response to the closing detection switch (603) detecting the closing detection member (604).

16. The centering control method for unmanned aerial vehicle takeoff and landing positioning according to claim 14, wherein in response to the unmanned aerial vehicle being ready to be launched, the unmanned aerial vehicle detection switch (605) detects absence of the unmanned aerial vehicle and outputs abnormal information.

17. The centering control method for unmanned aerial vehicle takeoff and landing positioning according to claim 14, further comprising: after the unmanned aerial vehicle lands and centering is completed, detecting, by the unmanned aerial vehicle detection switch (605), a presence of the unmanned aerial vehicle, and indicating correct centering operation.

18. A computer device, configured to execute the centering control method for unmanned aerial vehicle takeoff and landing positioning according to any one of claims 14-17.

19. A computer-readable storage medium, configured to store software for executing the centering control method for unmanned aerial vehicle takeoff and landing positioning according to any one of claims 14-17.
